# EUROPEAN PATENT SPECIFICATION

(11) **EP 0 806 428 B1**
(45) Date of publication and mention of the grant of the patent: **29.01.2003**
(21) Application number: 96107300.4
(22) Date of filing: 08.05.1996
(51) Int. Cl.: C07F 9/38

(54) **Method for isolating N-phosphonomethylglycine**
Verfahren zur Abtrennung von N-Phosphonomethylglycin
Procédé pour isoler la N-phosphonométhyl glycine

(43) Date of publication of application: 12.11.1997
(73) Proprietor: SHOWA DENKO KABUSHIKI KAISHA, Minato-ku, Tokyo 105-0011 (JP)
(72) Inventor: Miyata, Hideo, c/o Showa Denko K.K., Kawasaki-shi, Kanagawa, 210 (JP); Sasaki, Toru, c/o Showa Denko K.K., Kawanuma-gun, Fukushima, 969-34 (JP); Morikawa, Kohei, c/o Showa Denko K.K., Kawasaki-shi, Kanagawa, 210 (JP)
(74) Representative: Strehl Schübel-Hopf & Partner

(56) References cited:
- FR-A- 2 460 959
- US-A- 4 221 583
- CHEMICAL ABSTRACTS, vol. 122, no. 11, 13 March 1995 Columbus, Ohio, US; abstract no. 133414, JARON A W ET AL: "Preparation of N-phosphomethylglycine" XP002015122 & PL-A-159 424 (INSTYTUT PRZEMYSLU PRGANICZNEGO) 31 December 1992
- CHEMICAL ABSTRACTS, vol. 118, no. 5, 1 February 1993 Columbus, Ohio, US; abstract no. 039415, MORIKAWA K ET AL: "Preparation of N-(phosphonomethyl)glycine as herbicide" XP002015123 & JP-A-04 279 595 (SHOWA DENKO K.K.) 5 October 1992

## Description

### FIELD OF THE INVENTION

The present invention relates to a method for isolating N-phosphonomethylglycine. N-phosphonomethylglycine in the form of its isopropylammonium salt or trimethylsulfonium salt is biodegradable. These compounds are also effective as herbicides when used in a small amount, and are therefore widely used in agriculture.

### DESCRIPTION OF RELATED ART

A large number of methods for producing N-phosphonomethylglycine are known. Some production methods result in the formation of an aqueous solution of an alkali metal salt and/or an alkaline earth metal salt of N-phosphonomethylglycine. Thus, a means for isolating and purifying N-phosphonomethylglycine from the aqueous solution in high purity and good yield has been in demand.

Japanese Unexamined Patent Publication No. 4-279595 discloses a method for producing N-phosphonomethylglycine which comprises reacting an aminomethylphosphonic acid and glycolonitrile in the presence of an alkali metal hydroxide. Then, an alkali metal hydroxide is further added in an amount sufficient to neutralize the carboxylic acid that is produced by the hydrolysis. According to this patent publication (Example 2), the reaction yield is very high, and the conversion ratio of each of the aminomethylphosphonic acid and glycolonitrile as raw materials is 95 %. The purity is also high, and the reaction operation is simple. Hence, this is an excellent method for producing N-phosphonomethylglycine. However, the compound obtained after completion of the reaction in this method is an alkali metal salt of N-phosphonomethylglycine. Therefore, N-phosphonomethylglycine must be isolated and purified therefrom by adding an acid. In the isolation and purification, means such as acid deposition or contacting with an ion exchange resin is used.

U.S. Patent 4,221,583 describes in its Example a technique of using a ion exchange resin after hydrolyzing N-phosphonomethylglycinonitrile with hydrochloric acid or sodium hydroxide.

FR-A-2 460 959 discloses a process for preparing N-phosphonomethyl-glycine by reacting glycine with formaldehyde in the presence of an alkanol, further reacting the obtained N,N-bis-hydroxymethyl-glycine with dialkyl phosphite, treating the formed dialkyl-[N-(hydroxymethylene-glycine)methylene]-phosphite with a strong mineral acid and finally hydrolysing the alkyl ester of N-phosphonomethyl-glycine in the presence of a mineral acid.

According to a process disclosed in Chemical Abstracts, vol. 122, 1995, no. 11, sodium N-diethylphosphonomethylglycinate is acidified with hydrochloric acid, the precipitated sodium chloride is separated and the acidic residue is distilled and thereafter crystallized at a pH of 1.9 to 2.1.

Thus, there is a need in the art for providing an improved method for isolating and purifying free N-phosphonomethylglycine from its alkali metal salt in high purity and good yield.

The object of the present invention is to provide a method for isolating N-phosphonomethylglycine, wherein free N-phosphonomethylglycine is isolated and purified from an aqueous solution of an alkali metal salt and/or alkaline earth metal salt of N-phosphonomethylglycine in high purity and good yield.

In order to overcome the above-described problems, the present inventors have extensively investigated methods for isolating and purifying N-phosphonomethylglycine. As a result of their studies, the present inventors found that N-phosphonomethylglycine is isolated and purified in high purity and good yield by a method which comprises adding an acid to precipitate salts from an aqueous solution of an alkali metal salt and/or an alkaline earth metal salt of N-phosphonomethylglycine at a pH exceeding 2.5 removing the precipitated salts, and adjusting the pH to 2.5 or lower to crystallize N-phosphonomethylglycine. The present invention has been accomplished based on this finding.

In accordance with the present invention, N-phosphonomethylglycine is isolated and purified in high purity and in good yield. In the inventive method, an acid is added to an aqueous solution of an alkali metal salt and/or an alkaline earth metal salt of N-phosphonomethylglycine to precipitate salts therefrom. After removing the precipitated salts, the pH is further lowered to crystallize N-phosphonomethylglycine.

### SUMMARY OF THE INVENTION

The present invention relates to a method for isolating N-phosphonomethylglycine, which comprises adding an acid to precipitate salts from an aqueous solution of an alkali metal salt and/or an alkaline earth metal salt of N-phosphonomethylglycine at a pH exceeding 2.5, removing the precipitated salts, and adjusting the pH to 2.5 or lower to crystallize N-phosphonomethylglycine.

One embodiment of the present invention relates to a method for isolating N-phosphonomethylglycine which comprises adding an acid to precipitate at a pH exceeding 2.5 salts from an aqueous solution of an alkali metal salt and/or an alkaline earth metal salt of N-phosphonomethylglycine obtained by hydrolyzing N-phosphonomethylglycinonitrile with an alkali metal hydroxide and/or an alkaline earth metal hydroxide, removing the precipitated salts, and adjusting the pH to 2.5 or lower to crystallize N-phosphonomethylglycine.

A further embodiment of this invention is directed to a method for isolating N-phosphonomethylglycine which comprises reacting glycolonitrile with an aminomethylphosphonic acid in the presence of an alkali metal hydroxide and/or an alkaline earth metal hydroxide, hydrolyzing the reaction product to obtain an aqueous solution of an alkali metal salt and/or an alkaline earth metal salt of N-phosphonomethylglycine, adding an acid to precipitate salts from the aqueous solution at a pH exceeding 2.5 higher, removing the precipitated salts, and adjusting the pH to 2.5 or lower to crystallize N-phosphonomethylglycine.

Preferably, in the above defined isolation methods the alkali metal salt is a sodium salt or a potassium salt, and the alkaline earth metal salt is a calcium salt or a magnesium salt.

### DETAILED DESCRIPTION OF THE INVENTION

The present invention is described in detail below.

The aqueous solution of an alkali metal salt and/or an alkaline earth metal salt of N-phosphonomethylglycine for use in the present invention is not particularly limited. For example, the subject aqueous solution may be obtained in a production process of N-phosphonomethylglycine or in a purification process thereof.

The alkali metal salt can be a sodium salt or a potassium salt, and the alkaline earth metal salt can be a calcium salt or a magnesium salt. These salts may be used individually or in combination of two or more thereof. With respect to the production process described in Japanese Unexamined Patent Publication No. 4-279595, a sodium salt and a potassium salt are preferred.

In isolating N-phosphonomethylglycine from an aqueous solution of an alkali metal salt and/or an alkaline earth metal salt of N-phosphonomethylglycine by an acid deposition process, it is important to efficiently remove neutralized salts (produced upon neutralization of an aqueous solution of an alkali metal salt and/or alkaline earth metal salt of N-phosphonomethylglycine) while suppressing a reduction in the recovery of N-phosphonomethylglycine to the greatest possible extent so as to inhibit mingling of neutralized salts in the isolated N-phosphonomethylglycine. In the present invention, the neutralized salts are effectively removed by advantageously using the difference in solubility of N-phosphonomethylglycine or the neutralized salt in water as a function of pH. As a result, N-phosphonomethylglycine in its free form can be isolated in high yield and in high purity.

The present inventors have investigated the change in solubility of N-phosphonomethylglycine in water at room temperature (about 23 °C) as a function of pH. The solubility (wt/wt%) thereof was found to be 2.7 at a pH of 0.75, 1.0 at a pH of 1.25, 1.5 at a pH of 2.45, 4.8 at a pH of 3.15, 13.8 at a pH of 3.9 or 14.0 at a pH of 5.0. More specifically, it was found that when the pH is about 2.5 or higher, particularly 4 or higher, the solubility of N-phosphonomethylglycine in water is fairly high. However, when the pH is about 2.5 or lower, the solubility is much lower than at a higher pH. In neutralizing an alkali metal salt and/or alkaline earth metal salt of N-phosphonomethylglycine, the solubility of the neutralized salt in water in general is usually less dependent upon the pH, excluding the case where the aqueous solution is made extremely acidic. Accordingly, the aqueous solution containing an alkali metal salt and/or alkaline earth metal salt of N-phosphonomethylglycine is neutralized at a pH exceeding 2.5 to deposit a part of the neutralized salts thereby produced. After removing the neutralized salts thus deposited, the pH is changed to 2.5 or lower to crystallize N-phosphonomethylglycine.

First, an aqueous solution of an alkali metal salt and(or) alkaline earth metal salt of N-phosphonomethylglycine is neutralized by adding thereto an acid and by concentrating the solution, if desired, to a pH exceeding 2.5, preferably 4 or higher, to thereby deposit a part of the neutralized salts thus produced. The acid includes an inorganic acid and an organic acid, and representative examples thereof include hydrochloric acid, sulfuric acid, nitric acid, formic acid, acetic acid, propionic acid and benzoic acid.

In depositing a part of the neutralized salts, the temperature is preferably 30 °C or lower. If the temperature is too high, the solubility of the neutralized salts disadvantageously increases.

In this operation, the concentration of N-phosphonomethylglycine is preferably from 10 to 17 wt%. If the concentration is too high, N-phosphonomethylglycine is disadvantageously deposited in a large amount simultaneously with the neutralized salts. On the other hand, if the concentration is too low, only a small amount of the neutralized salts is deposited.

After separating the neutralized salts thus deposited according to a known method such as filtration, the pH is adjusted to 2.5 or lower, preferably 2.0 or lower, by concentrating the solution or by adding an acid to thereby deposit N-phosphonomethylglycine.

The temperature for crystallizing N-phosphonomethylglycine is preferably 30 °C or lower. If the temperature is too high, the yield of N-phosphonomethylglycine is disadvantageously lowered.

The crystallized N-phosphonomethylglycine can be isolated according to a known method such as filtration.

The thus-isolated N-phosphonomethylglycine has a low neutralized salt content and has a high purity as compared with a product crystallized in a single stage without removing salts produced by neutralization of the alkali aqueous solution of N-phosphonomethyiglycine.

The isolation method of N-phosphonomethylglycine of the present invention is advantageously applied to a method which comprises adding an acid to precipitate salts from an aqueous solution of an alkali metal salt and/or an alkaline earth metal salt of N-phosphonomethylglycine obtained by hydrolyzing N-phosphonomethylglycinonitrile with an alkali metal hydroxide and/or alkaline earth metal hydroxide. In this case, the neutralized salts are precipitated at a pH exceeding 2.5, and after removing the neutralized salts, the pH is adjusted to 2.5 or lower to crystallize N-phosphonomethylglycine. In this method, the alkali used in the hydrolysis is preferably sodium hydroxide or potassium hydroxide, and the metal salt is preferably a sodium salt or a potassium salt.

The present invention is also advantageously applied to a method which comprises reacting glycolonitrile with an aminomethylphosphonic acid in the presence of an alkali metal hydroxide and/or an alkaline earth metal hydroxide, hydrolyzing the reaction product to obtain an aqueous solution of an alkali metal salt and/or an alkaline earth metal salt of N-phosphonomethylglycine, adding an acid to precipitate salts from the aqueous solution at a pH exceeding 2.5, removing the precipitated salts, and adjusting the pH to 2.5 or lower to crystallize N-phosphonomethylglycine. In this method, the alkali used in the hydrolysis is preferably sodium hydroxide or potassium hydroxide, and the metal salt is preferably a sodium salt or a potassium salt.

### DESCRIPTION OF PREFERRED EMBODIMENTS

The isolation method of N-phosphonomethylglycine of the present invention is described in greater detail below by reference to the following representative Examples. These examples are set forth to facilitate an understanding of the present invention. However, the present invention should not be construed as being limited thereto.

### Example 1

Into a 200 ml-volume four-necked flask were added a mixed solution of 50 g of water, 16.7 g (200 mmol) of a 48 % aqueous sodium hydroxide solution and 11.1 g (100 mmol) of an aminomethylphosphonic acid. The reaction vessel was cooled in ice water, and the reaction solution was stirred while keeping the temperature at 5 °C. To the resulting reaction solution, 14.3 g (100 mmol) of a 40 % glycolonitrile solution was added dropwise over a period of 30 minutes. Then, the solution was stirred at 5 °C or lower for 30 minutes. After returning to room temperature, the mixture was stirred for 1 hour. Thereafter, 29.4 g (350 mmol) of a 48 % aqueous sodium hydroxide solution was added thereto and heated under reflux for 2 hours. After completing the reaction, the solution was analyzed by HPLC and was found to contain 95 mmol of N-phosphonomethylglycine sodium salt. The reaction yield was 95 % based on the conversion of the aminomethylphosphonic acid and glycolonitrile starting materials.

The reaction solution was adjusted to have a pH of 6 (as measured by a pH meter that was calibrated at 20 °C with a buffer solution having a pH of 7) by adding thereto concentrated hydrochloric acid, and then solidified by evaporation and drying. Thereafter, 100 g of water was added and after stirring at room temperature, the undissolved solid contents were separated by filtration. The solid contents had a dry weight of 32.5 g and according to HPLC analysis, contained 0.2 g of N-phosphonomethylglycine. Then, 12.5 g of concentrated hydrochloric acid was further added to attain a pH of 1.5, and the solution was cooled to 5 °C. The crystallized N-phosphonomethylglycine was separated by filtration, washed with water and dried. The weight was 14.4 g and the purity as determined by HPLC was 98 %. The recovery of N-phosphonomethylglycine was 88 %.

### Comparative Example 1

The reaction was conducted in the same manner as in Example 1. Next, the reaction solution was adjusted to pH 6 by adding thereto concentrated hydrochloric acid, and then solidified by evaporation and drying. Thereafter, 100 g of water was added thereto, the solution was adjusted to pH 1.5 by further adding 12.5 g of concentrated hydrochloric acid and then cooled. Crystallized N-phosphonomethylglycine was separated by filtration, washed with water and dried. The weight was 43.3 g and the purity as determined by HPLC was 33 %. The recovery of N-phosphonomethylglycine was 89 %.

## Claims

1. A method for isolating N-phosphonomethylglycine which comprises adding an acid to precipitate salts from an aqueous solution of an alkali metal salt and/or an alkaline earth metal salt of N-phosphonomethylglycine at a pH exceeding 2.5, removing the precipitated salts, and adjusting the pH to 2.5 or lower to crystallize N-phosphonomethylglycine.

2. A method for isolating N-phosphonomethylglycine which comprises adding an acid to precipitate at a pH exceeding 2.5 salts from an aqueous solution of an alkali metal salt and/or an alkaline earth metal salt of N-phosphonomethylglycine obtained by hydrolyzing N-phosphonomethylglycinonitrile with an alkali metal hydroxide and/or an alkaline earth metal hydroxide, removing the precipitated salts, and adjusting the pH to 2.5 or lower to crystallize N-phosphonomethylglycine.

3. A method for preparing and isolating N-phosphonomethylglycine which comprises reacting glycolonitrile with an aminomethylphosphonic acid in the presence of an alkali metal hydroxide and/or an alkaline earth metal hydroxide, hydrolyzing the reaction product to obtain an aqueous solution of an alkali metal salt and/or an alkaline earth metal salt of N-phosphonomethylglycine, adding an acid to precipitate salts from the aqueous solution at a pH exceeding 2,5, removing the precipitated salts, and adjusting the pH to 2.5 or lower to crystallize N-phosphonomethylglycine.

4. A method as claimed in any of the claims 1 to 3, wherein the alkali metal salt is a sodium salt or a potassium salt.

5. A method as claimed in any of the claims 1 to 3, wherein the alkaline earth metal salt is a calcium salt or a magnesium salt.

## Patentansprüche

1. Verfahren zum Isolieren von N-Phosphonomethylglycin, welches das Zugeben einer Säure, um Salze aus einer wässerigen Lösung eines Alkalimetallsalzes und/oder eines Erdalkalimetallsalzes von N-Phosphonomethylglycin bei einem pH-Wert über 2,5 auszufällen, das Entfernen der ausgefällten Salze und das Einstellen des pH-Wertes auf 2,5 oder niedriger zur Kristallisation von N-Phosphonomethylglycin umfasst.

2. Verfahren zum Isolieren von N-Phosphonomethylglycin, welches das Zugeben einer Säure, um bei einem pH-Wert von über 2,5 Salze aus einer Lösung eines Alkalimetallsalzes und/oder eines Erdalkalimetallsalzes von N-Phosphonomethylglycin, erhalten durch Hydrolysieren von N-Phosphonomethylglycinonitril mit einem Alkalimetallhydroxid und/oder einem Erdalkalimetallhydroxid, auszufällen, das Entfernen der ausgefällten Salze und das Einstellen des pH-Werts auf 2,5 oder niedriger, um N-Phosphonomethylglycin zu kristallisieren, umfasst.

3. Verfahren zur Herstellung und Isolierung von N-Phosphonomethylglycin, welches das Umsetzen von Glycolnitril mit einer Aminomethylphosphonsäure in Anwesenheit eines Alkalimetallhydroxids und/oder eines Erdalkalimetallhydroxids, das Hydrolysieren des Reaktionsprodukts unter Bildung einer wässerigen Lösung eines Alkalimetallsalzes und/oder Erdalkalimetallsalzes von N-Phosphonomethylglycin, das Zugeben einer Säure, um Salze aus der wässerigen Lösung bei einem pH-Wert über 2,5 auszufällen, das Entfernen der ausgefällten Salze und das Einstellen des pH-Wertes auf 2,5 oder niedriger, um N-Phosphonomethylglycin zu kristallisieren, umfasst.

4. Verfahren nach einem der Ansprüche 1 bis 3, wobei das Alkalimetallsalz ein Natriumsalz oder ein Kaliumsalz ist.

5. Verfahren nach einem der Ansprüche 1 bis 3, wobei das Erdalkalimetallsalz ein Calciumsalz oder ein Magnesiumsalz ist.

## Revendications

1. Méthode pour l'isolement de la N-phosphonométhylglycine comprenant l'addition d'un acide pour précipiter les sels à partir d'une solution aqueuse d'un sel de métal alcalin et/ou d'un sel de métal alcalino-terreux de la N-phosphonométhylglycine à un pH dépassant 2,5, l'élimination des sels précipités et l'ajustement du pH à une valeur égale ou inférieure à 2,5 pour faire cristalliser la N-phosphonométhylglycine.

2. Méthode pour l'isolement de la N-phosphonométhylglycine comprenant l'addition d'un acide pour précipiter, à un pH dépassant 2,5, les sels à partir d'une solution aqueuse d'un sel de métal alcalin et/ou d'un sel de métal alcalino-terreux de la N-phosphonométhylglycine obtenue par hydrolyse du N-phosphonométhylglycinonitrile avec un hydroxyde de métal alcalin et/ou un hydroxyde de métal alcalino-terreux, l'élimination des sels précipités et l'ajustement du pH à une valeur égale ou inférieure à 2,5 pour faire cristalliser la N-phosphonométhylglycine.

3. Méthode pour préparer et isoler la N-phosphonométhylglycine comprenant la réaction du glycolonitrile avec l'acide aminométhylphosphonique en présence d'un hydroxyde de métal alcalin et/ou d'un hydroxyde de métal alcalino-terreux, l'hydrolyse du produit de réaction pour obtenir une solution aqueuse d'un sel de métal alcalin et/ou d'un sel de métal alcalino-terreux de la N-phosphonométhylglycine, l'addition d'un acide pour précipiter les sels à partir de la solution aqueuse à un pH dépassant 2,5, l'élimnation des sels précipités et l'ajustement du pH à une valeur égale ou inférieure à 2,5 pour faire cristalliser la N-phosphonométhylglycine.

4. Méthode selon l'une quelconque des revendications 1 à 3, dans laquelle le sel de métal alcalin est un sel de sodium ou un sel de potassium.

5. Méthode selon l'une quelconque des revendications 1 à 3, dans laquelle le sel de métal alcalino-terreux est un sel de calcium ou un sel de magnésium.
